# EUROPEAN PATENT APPLICATION

(11) **EP 2 684 789 A2**
(43) Date of publication of application: **15.01.2014**
(21) Application number: 13176094.4
(22) Date of filing: 11.07.2013
(51) Int. Cl.: B62M 3/08

(54) **Releasable Connection System**

(30) Priority: 11.07.2012 US 201213546522
(71) Applicant: Stone Age Equipment Inc., Redlands, CA 92373 (US)
(72) Inventor: COLE, Charles, Redlands, CA California 92373 (US)
(74) Representative: Wegner, Hans

(57) **Abstract**

In certain embodiments there is provided a connection system having at least one male engagement component configured to interact with a female engagement component. The female engagement component is formed of a material that, when pressure is applied, enables the at least one male engagement component to imprint into the material so that a closed connection may be formed to lock the positioning of the two components. The material is also configured to flow/float around the male engagement component so that the position of the male engagement component with respect to the female engagement component may be adjusted while the two engagement components are in contact and the male engagement component is not imprinted within the female engagement component.

## Description

### FIELD OF THE INVENTION

The invention generally relates to a releasable connection system.

### BACKGROUND OF THE INVENTION

In a variety of different applications it may be desirable to employ a releasable connection system that is capable of providing a firm connection between two objects while still allowing the relative position of the two objects to be adjusted. Specifically, there are many applications (such as the placement of transportable goods in a container or vehicle, the storage of goods in a warehouse or private storage unit, and so forth) where it is desirable for two objects to be connected at a certain position for a certain amount of time without slipping or sliding and for there to be a relatively easy way of fixing and releasing the connection. Having a fast and reliable connection is especially desirable in a dynamic environment, such as a sports environment where quick release of a connection is needed for safety and/or performance reasons.

As one of many examples, with certain activities, such as cycling, it is sometimes desirable for the outsole of a shoe to releasably attach to another structure, such as the pedal of a bike. For example, a cyclist is able to generate more power if the pedal is connected to the shoe so that the cyclist is able to transmit power to the crank via the pedals during the upstroke as well as the downstroke. The connection of the shoe to the pedal also provides more stability in certain situations.

There are known ways of releasably attaching a shoe with a pedal, such as cage-type construction pedals (where the shoe is received snuggly within a cage of the pedal) or clip-in (clipless) pedals. With a clip-in pedal, a cleat on the outsole of the shoe clicks into a receptacle located on the top surface of the clip-in pedal when the cleat is aligned a particular way with respect to the receptacle. Once clicked into place, the shoe is attached to the pedal and the cleat can only be disengaged from the receptacle of the pedal when the shoe is turned a certain way. With clip-in pedals, clicking the cleat into place within the pedal and releasing the shoe from the pedal can be difficult and therefore dangerous.

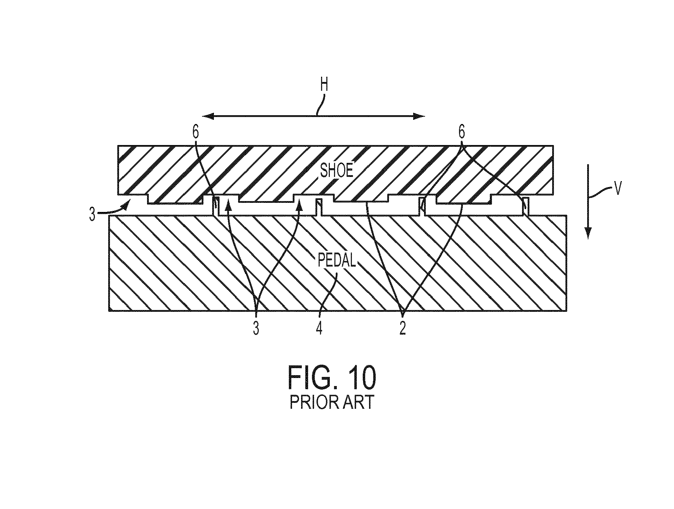

Another type of attachment mechanism is the use of a generally flat pedal that includes pins (also referred to as screws) that project from a top surface of the pedal so that the pin (which may be a spike or a screw with threads) is exposed and available for engagement. The outsole of the shoe typically comprises a tread pattern (such as tread elements 2 shown in Figure 10) between which the pins (such as pins 6 in Figure 10) are received to provide a mechanical engagement between the shoe and the pedal. To facilitate receipt of the pin within the tread elements from various angles, the diameter of the space (such as space 3 in Figure 10) between two tread elements is typically larger than the diameter of the pin. Thus, the pin is permitted to move within the tread elements, allowing the shoe to shift with respect to the pedal and potentially causing the cyclist to lose contact between the shoe and the pedal and risk accident and injury. Moreover, to release the shoe from its engagement with the pedal, the cyclist must move the shoe upwards so that the space between the tread elements is no longer in contact with the pins. In addition, because it is necessary that the pins be positioned in a specific orientation with respect to the tread elements, it can be difficult for a cyclist to adjust his foot's position on the pedal, particularly when riding downhill.

### SUMMARY OF THE INVENTION

Disclosed is a connection system having at least one male engagement component configured to interact with a female engagement component. The female engagement component is a generally flat surface formed of a material that, when pressure is applied, enables the at least one male engagement component to imprint into the material and lock the position of the male engagement component with respect to the female engagement component. The material is configured to flow/float around the male engagement component so that a closed connection can be made. The position of the male engagement component with respect to the female engagement component can be individually chosen while the two engagement components are in contact with one another so long as pressure between the two components is not fully applied to imprint the male engagement component into the female engagement component. In this way, the position of the male engagement component with respect to the female engagement component can be individually adjusted.

In some embodiments, the connection system is used to releasably connect a fixed device (for example, but not limited to, the pins on a plate or a pedal) to a movable device (for example, but not limited to, a shoe, glove, container, box or other transportable or storable good). In some embodiments, the connection system is used to releasably connect a shoe to another component, such as a pedal of a bike.

The terms "invention," "the invention," "this invention" and "the present invention" used in this patent are intended to refer broadly to all of the subject matter of this patent and the patent claims below. Statements containing these terms should not be understood to limit the subject matter described herein or to limit the meaning or scope of the patent claims below. Embodiments of the invention covered by this patent are defined by the claims below, not this summary. This summary is a high-level overview of various aspects of the invention and introduces some of the concepts that are further described in the Detailed Description section below. This summary is not intended to identify key or essential features of the claimed subject matter, nor is it intended to be used in isolation to determine the scope of the claimed subject matter. The subject matter should be understood by reference to the entire specification of this patent, all drawings and each claim.

### BRIEF DESCRIPTION OF THE FIGURES

Illustrative embodiments of the present invention are described in detail below with reference to the following drawing figures:

FIG. 1 schematically illustrates a female engagement component according to one embodiment of the invention positioned with respect to a plurality of male engagement components.

FIG. 2 schematically illustrates contact between some of the male and female engagement components of FIG. 1.

FIG. 3 schematically illustrates the male engagement components of FIG. 1 as they imprint within the female engagement component of FIG. 1.

FIGS. 4-6 schematically illustrate the female engagement component and the male engagement components of FIG. 1 as the relative position of the two components is adjusted.

FIG. 7 schematically illustrates a female engagement component according to another embodiment of the invention as it is positioned with respect to a plurality of male engagement components according to another embodiment of the invention.

FIG. 8 schematically illustrates the male engagement components of FIG. 7 as they imprint within the female engagement component of FIG. 7.

FIG. 9 schematically illustrates the male engagement components according to another embodiment of the invention as they imprint within a female engagement component according to another embodiment of the invention.

FIG. 10 schematically illustrates the engagement between a conventional outsole of a shoe and a flat pedal.

FIG. 11 is a bottom plan view of a shoe according to one embodiment of the invention.

FIG. 12 is a bottom plan view of a shoe according to another embodiment of the invention.

FIG. 13 is a side view of the shoe of FIG. 12.

FIG. 14 is a cross-sectional view of the shoe of FIG. 12 taken along the line A-A.

FIG. 15 is a bottom perspective view of an outsole and midsole of another embodiment of the invention.

FIG. 16 is a bottom plan view of a shoe according to another embodiment of the invention.

FIG. 17 is a bottom plan view of a shoe according to another embodiment of the invention.

FIG. 18 is a perspective view of a shoe positioned with respect to a pedal according to an embodiment of the invention.

### DETAILED DESCRIPTION OF THE INVENTION

The subject matter of embodiments of the present invention is described here with specificity to meet statutory requirements, but this description is not necessarily intended to limit the scope of the claims. The claimed subject matter may be embodied in other ways, may include different elements or steps, and may be used in conjunction with other existing or future technologies. This description should not be interpreted as implying any particular order or arrangement among or between various steps or elements except when the order of individual steps or arrangement of elements is explicitly described.

Disclosed is a releasable connection system for use in a variety of applications. For example, the releasable connection system described herein may be used in the transportation industry, the retail industry, the storage or warehousing industry, the furniture industry, the sporting industry, or any other desired application or industry. With respect to the transportation industry, the connection system may be used, for example, to facilitate loading and unloading and/or transporting of transportable goods or cargo. More particularly, as described below, the goods to be transported may be housed within a container or box or on a rack having a bottom surface that faces and is configured to interact with a surface of the transporting vehicle (such as but not limited to a plane, ship, truck, forklift, automobile, etc.). For example, the bottom surface may have a female engagement component that includes a material in which a male engagement component associated with a device/plate on the flooring surface is capable of imprinting, as described below.

With respect to the retail industry, the connection system may be used, for example, to facilitate the display of retail items on shelves or in display windows. With respect to the storage industry, the connection system may be used, for example, to facilitate loading and unloading and/or transporting of boxes or other storable goods. With respect to the furniture industry, for example, the connection system may be used to facilitate the movement of furniture along a surface.

With respect to the sporting industry, for example, the releasable connection system may be used to facilitate connection between (1) a shoe and an exercise machine such as a stepper, cross trainer, rowing machine or the like, (2) a cycling shoe and a flat pedal, (3) a boat shoe and a boat, (4) a horseback riding shoe and a stirrup, (5) a glove and a baseball bat, (6) a climbing glove and a climbing structure, and so forth.

In essence, the disclosed connection system may be used in any application, including both commercial and private applications, where it is desirable to selectively limit movement between a fixed object and a movable object while also permitting easy adjustment of the relative positions of the two objects and easy fixing and release of the connection between the two objects. As a few non-limiting examples, the fixed object might be a piece of sporting equipment such as a bike, a bat, or a boat and the movable object might be a shoe, a glove, or a piece of apparel.

The disclosed connection system includes a female engagement component configured to interact with at least one male engagement component. In some embodiments, the female engagement component is a material having a low rebound elasticity, a high viscoelasticity, and a hardness that is low enough to allow a desired amount of deformation and hard enough to impart a desired amount of stability. For example, in some embodiments, the material of the female engagement component may have a rebound elasticity that is less than approximately 20%, an elongation that is more than approximately 600%, and in some embodiments is more than 900%, and a hardness that is between approximately 40 Shore A and approximately 70 Shore A. In some embodiments, the hardness is between approximately 45 Shore A and approximately 60 Shore A, and in some embodiments is between approximately 50 Shore A and approximately 55 Shore A.

In some embodiments, the material is a rubber compound containing high-molecular, absorbing, viscous, cross-linked elastomers that are able to return to their original state after permanent deformation. Therefore, after the release of a structure imprinting into the material, the material/compound will return to its original shape. The long-chain high-molecular compound may be capable of withstanding a high degree of inner deformation, rendering it elastically deformable. In some embodiments, the base elastomer is high-molecular and viscous for high elongation and low rebound elasticity. In one embodiment, the base elastomer of the material is one or more butyl rubbers (Isobutylene Isoprene Rubber - IIR), for example, but not limited to, ChloroButyl Rubber (Cl-IIR) or BromoButyl Rubber (Br-IIR). The material may comprise a base elastomer as described, and may include additional fillers, cross-linking agents, accelerators and activators. The activators may be used to generate and improve the cross-linking reaction between the filler and the elastomer. Compared to high-elastic elastomers like styrol butadiene rubber (SBR) with a rebound elasticity of approximately 45% or natural rubber (NR) with a rebound elasticity of at least 50%, the rubber compound of non-high elastic base elastomer may have a rebound elasticity of less than 20%. The high viscose and high-molecular compound is capable of allowing imprinting and following the contour of the microstructure of the surface as described below.

The female engagement component may be any object or device having a surface formed of the above material, where at least a portion of the surface is generally flat. The male engagement component may be a pin, screw, spike, post, projection, protrusion, a crown shaped surface of a pedal, or any other suitable structure. In use, the flat surface of the female engagement component is positioned at an approximately 90 degree angle relative to the male engagement component.

The material of the female engagement component is configured so that, when sufficient pressure is applied, the male engagement component is capable of imprinting within the material to lock the male engagement component into position with respect to the female engagement component ("locked position"). In some embodiments, sufficient pressure is applied by pushing either the weight of the object with which the female engagement component is associated into the male engagement component, or by putting an additional weight onto the connection system. In some embodiments, the female engagement component is placed on top of the male engagement component and weight/pressure is applied in a substantially vertical direction. In some embodiments, the weight/pressure is applied over a range of approximately 85 degrees to approximately 95 degrees from horizontal.

When in its locked position, the male engagement component is restricted or prevented from slipping, sliding, or shifting in one or more directions with respect to the female engagement component, as explained in more detail below. In some embodiments, the movement is restricted/prevented in a generally horizontal direction. In some embodiments, the movement is restricted/prevented in all non-vertical directions.

The material of the female engagement component is also configured so that the female engagement component and the male engagement component may be released from their locked position when sufficient pressure no longer exists between the two components. The material of the female engagement component is further configured so that the material "flows" or "floats" around the male engagement component, thus allowing the position of the male engagement component to be adjusted relative to the female engagement component when full pressure is not applied between the two components but while the two components are in contact with one another. In other words, the material of the female engagement component is configured to follow the outer contour of the male engagement component.

As stated above, the male engagement component may be any suitable structure, such as, but not limited to, a pin, screw, spike, post, projection, protrusion, crown shaped pedal or the like. The male engagement component may be fixed with respect to a surface or structure (such as a plate or pedal, etc.) or may be connectable to any surface or structure. The tip of the male engagement component may be pointed or flat and the sides of the male engagement component may be flat, uniform, sloped, tapered, or have any suitable configuration. The dimensions and shape of the male engagement component will vary depending on the application with which it will be used. For example, a male engagement component to be used within a truck will likely be thicker and longer than one to be used with a bike pedal. The male engagement component may project relative to the structure with which it is used in any suitable manner, such as generally vertically, generally horizontally, or at any suitable angle. In some embodiments, the male engagement component projects at an approximately 90 degree angle relative to the female engagement component and/or the male engagement component. If more than one male engagement component is provided, the more than one engagement component is provided substantially parallel to the others, in some cases regardless of the shape/configuration of the structure from which it projects.

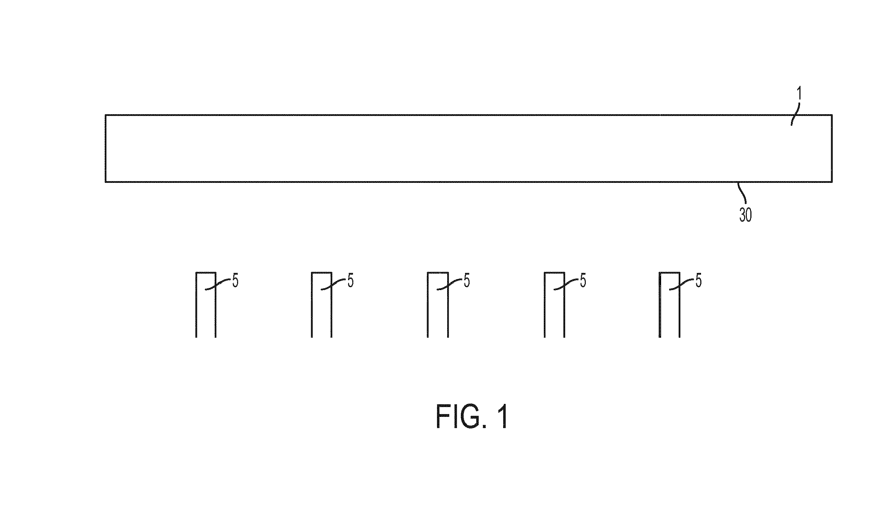

FIGS. 1-3 illustrate various stages of connection between a plurality of male engagement components (such as male engagement components 5) and a female engagement component (such as female engagement component 1). FIG. 1 illustrates the female engagement component 1, which includes a surface 30, as it is positioned with respect to, but is not in contact with, male engagement components 5. The surface 30 is positioned approximately 90 degrees relative to a longitudinal axis of the male engagement components 5. Although the male engagement components 5 are uniform in this embodiment, the size and/or shape of the individual male engagement components 5 may vary in other embodiments.

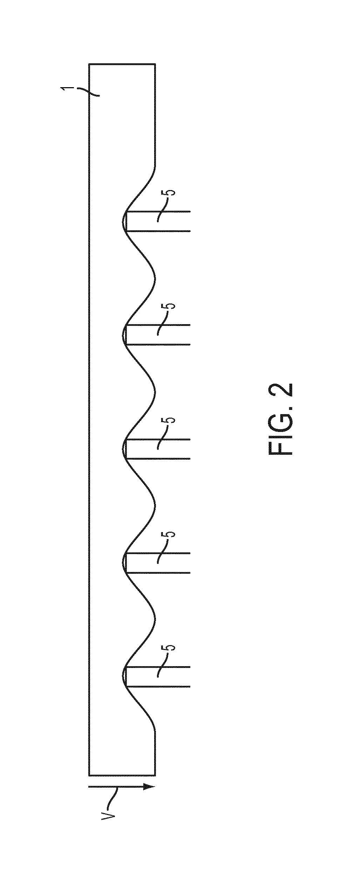

FIG. 2 illustrates the female engagement component 1 as it comes into contact with the male engagement components 5, but before full pressure is applied. As can be seen in FIG. 2, the female engagement component 1 is configured to deform and begin to flow/float around the male engagement components 5. This allows a to-be-mounted/connected mobile device (such as a device associated with female engagement component 1) to be placed over a fixed device (such as a device associated with male engagement components 5) and the relative position of the two devices to be adjusted before full pressure is applied to the fixed device.

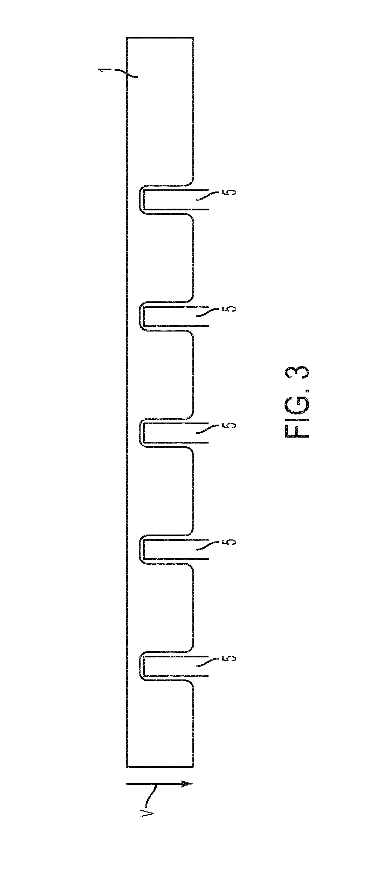

As shown in FIG. 3, when full pressure (sufficient pressure via gravity, weight or otherwise) is applied in a substantially vertical direction V between the male engagement components 5 and the female engagement component 1, the female engagement component deforms so that the male engagement components 5 imprint into the female engagement component 1 to attach the two components together. In this imprinted state, the relative position of the two components is locked in place so that movement between the two components in one or more non-vertical directions is restricted or prevented altogether. In some embodiments, movement in all non-vertical directions is restricted/prevented.

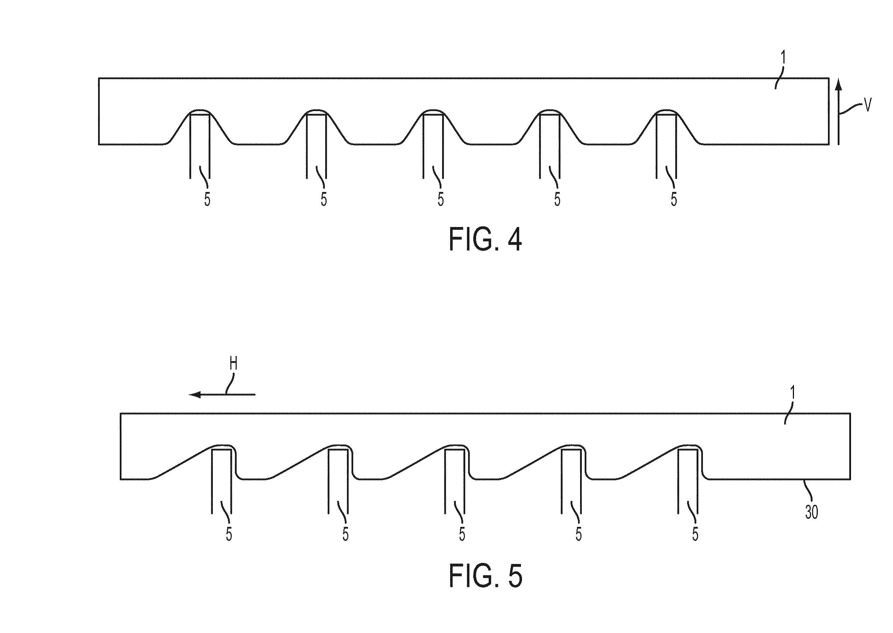

FIGS. 4-6 illustrate the various stages of adjustment of the positioning of the female engagement component 1 with respect to the male engagement components 5. Throughout the adjustment process illustrated in FIGS. 4-6, the female engagement component 1 is still in contact with the male engagement components 5. As one example, when the female engagement component 1 is associated with a shoe and the male engagement components are associated with a bike pedal, a cyclist is able to adjust the position of his shoe on a bike pedal while still riding the bike and keeping his shoe on the pedal.

FIG. 4 illustrates the male engagement components 5 and the female engagement component 1 in contact as full pressure between the two components is released in a substantially vertical direction V. Specifically, although the two components are still in contact and the female engagement component still flows/floats around the male engagement components, the position of the male engagement components 5 with respect to the female engagement component 1 may be adjusted, as shown in FIG. 5. Specifically, the female engagement component 1 may be moved in a substantially horizontal direction H relative to the surface 30 of the female engagement component 1. During this adjusting movement, the female engagement component 1 continues to flow/float around the male engagement components 5, as shown in FIG. 5. Before locking the connection between the two components, any desired relative position of the two components can be chosen.

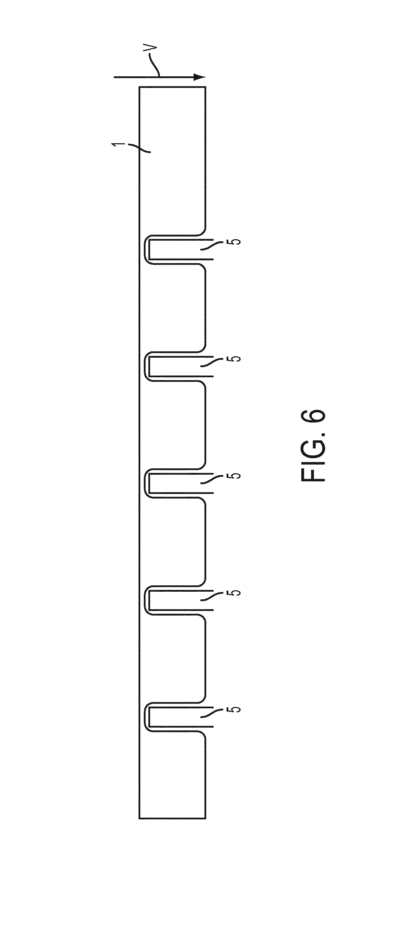

FIG. 6 illustrates the imprinting of the male engagement components 5 within the female engagement component 1 in the adjusted position as sufficient pressure is applied between the two components. In this locked position, relative movement between the two components in certain (in some embodiments, all non-vertical) directions is restricted or prevented altogether. In some embodiments, the pressure applied is high enough that the male engagement components 5 imprint into the female engagement component 1 completely so that the female engagement component 1 may touch the bottom surface onto which the male engagement components 5 are mounted. The elastic properties of the material prevents the male engagement component from breaking or buckling under the pressure applied, even if the female engagement component does not change its position relative to the male engagement component. In this way, the traction forces are dampened.

In one non-limiting application, a portion of a top surface of a transporting vehicle such as a plane, automobile, truck, ship, forklift, etc. may include one or more male engagement components or one or more female engagement components. Likewise, a bottom surface of a container or box or rack for housing goods or the like may include the other of the male and female engagement components. The female engagement component interacts with the one or more male engagement components as described throughout this disclosure to releasably connect the two objects. If desired, the top surface of the objects may have pins, protrusions, or other suitable structure positioned to interact with a female engagement component of another object to facilitate stacking of the objects on top of one another.

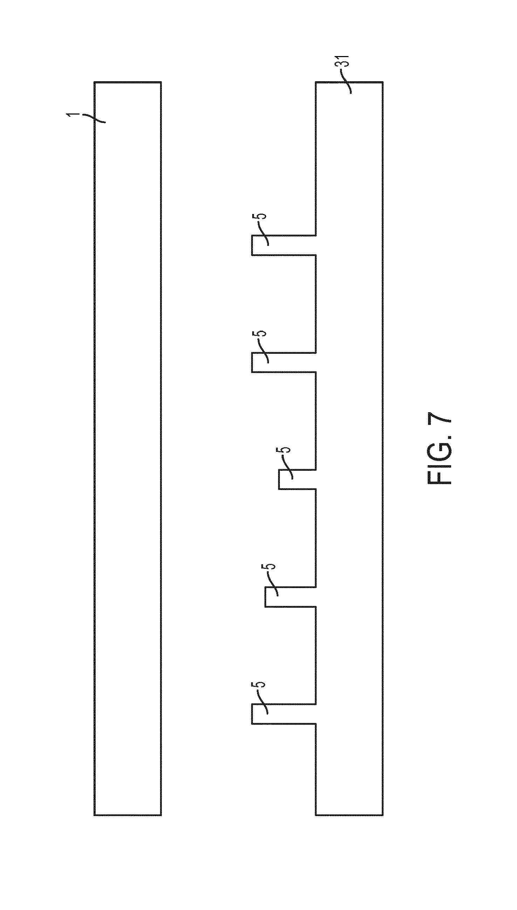

FIGS. 7-8 illustrate another application of the connection system. In this embodiment, the male engagement components 5 are non-uniform in that they are of different shapes and sizes. The male engagement components 5 are mounted on a connection device 31. Male engagement components 5 interact with female engagement component 1 as described above.

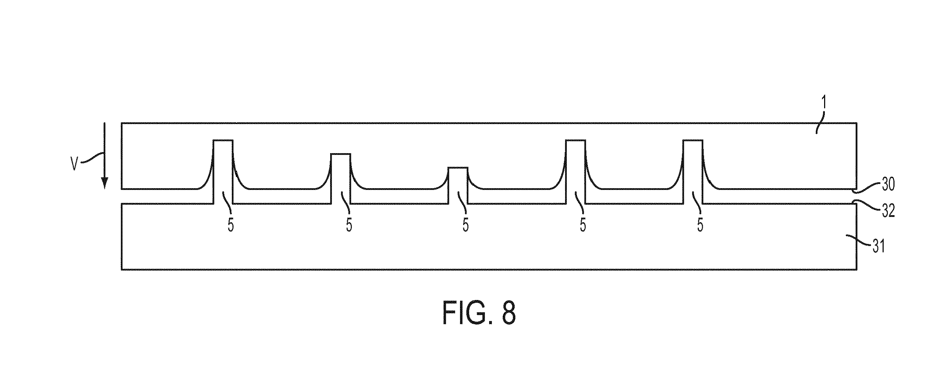

FIG. 8 illustrates the locked position of the components of FIG. 7 as pressure is applied in a generally vertical direction V and as the male engagement components 5 imprint in the female engagement component 1. In some embodiments, the surface 30 of the female engagement component 1 also imprints at least partially into the surface 32 of the connection device 31.

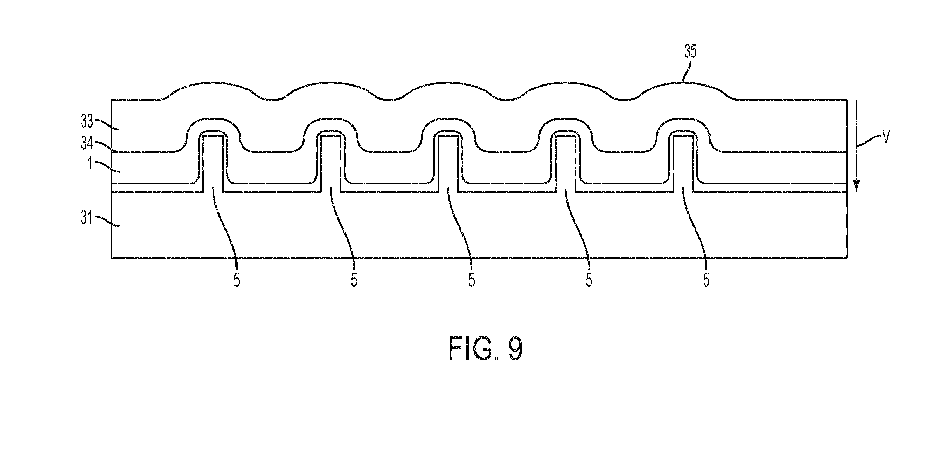

FIG. 9 illustrates another embodiment. As shown in FIG. 9, the thickness of the female engagement component 1 may vary. In this embodiment, the male engagement component 5 is taller than the thickness of the female engagement component 1. As illustrated in FIG. 9, the male engagement components 5 are mounted on a connection device 31. The female engagement component 1 has an upper surface 34 positioned adjacent to a layer 33. Layer 33 may support the connection between the male engagement components 5 and the female engagement component 1. In some cases, the layer 33 is made of a foamed material such as ethylene vinyl acetate (EVA). When pressure is applied in a substantially vertical direction V, the male engagement components 5 substantially imprint into the female engagement component 1 in that the overall shape of the upper surface 34 of the female engagement component 1 follows the shape of the male engagement components 5. The layer 33 accommodates the non-flat nature of the top surface of the female engagement component 1 and helps smooth the top surface, providing a more even appearance. If this embodiment is used with a shoe, and the female engagement component 1 is associated with an outsole of the shoe, the layer 33 could be a midsole that provides additional comfort to the person wearing the shoe.

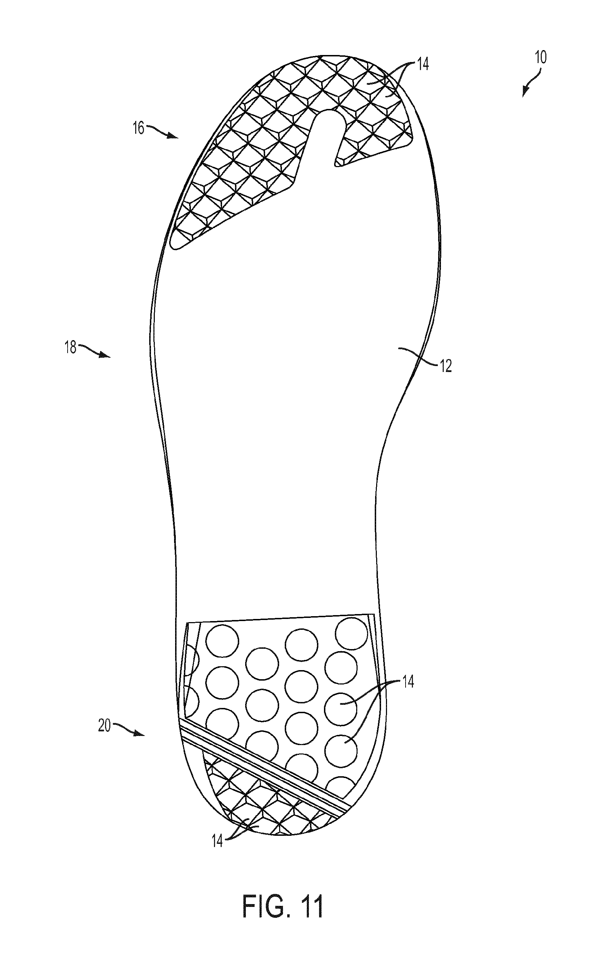

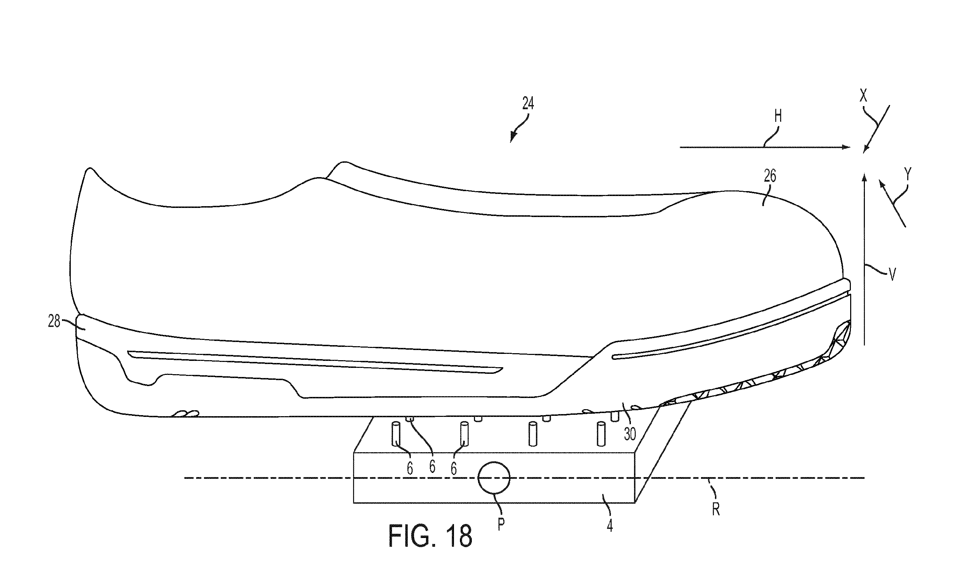

Other non-limiting applications of the connection system described above are shown in FIGS. 11-18. Specifically, FIGS. 11-18 illustrate components of the connection system as they are used with an outsole 10 of a cycling shoe and a flat pedal, such as pedal 4, of a bike. Any suitable pedal may be used, including ones with varying shapes, cross sections and dimensions. One non-limiting example of dimensions of a pedal may be approximately 102 mm x 97 mm x 11 mm. FIG. 18 generally shows a shoe 24 having an upper portion 26, a midsole 28, and an outsole 30. A reference axis R extends through pedal pivot P, through which the pedal is mounted on the mounting device. The directions referred to herein are relative to the reference axis R, so a substantially vertical direction V means substantially vertical to the pedal 4/reference axis R (independent of the direction in which the pedal faces), a substantially horizontal direction H means substantially horizontal/parallel to the reference axis R, and non-vertical directions X and Y are non-horizontal directions in relation to the reference axis R. If the pedal moves upward or downward in a circular pedaling motion, the connection system can be described independent from geographical directions.

As shown in FIG. 18, outsole 30 may be positioned relative to pedal 4 so that pins 6 are positioned approximately 90 degrees relative to the bottom surface of the outsole 30. In some non-limiting embodiments, the thickness of the outsole ranges from approximately 1.5-15 mm and in some embodiments is approximately 3.5 mm. In some non-limiting embodiments, the midsole is a foam (such as EVA) with a thickness of approximately 2-25 mm and in some embodiments is approximately 5 mm.

FIG. 10 schematically illustrates the engagement of an outsole of a conventional shoe with a flat pedal. As shown in FIG. 10, when the outsole is pushed in a generally downward direction V, the pins 6 of the pedal 4 are received within spaces 3 between tread elements 2 of the outsole of the shoe to form a mechanical interlock between the spaces 3 and the pins 6. However, because the diameter of the pins 6 must be smaller than the diameter of spaces 3 as explained above and as illustrated schematically in FIG. 10, the shoe is permitted to move, such as in a generally horizontal direction H and otherwise, within the spaces 3. Moreover, the shoe is not fixed in any diagonal direction (e.g., directions X, Y shown in FIG. 18) and therefore can easily slip off the pedal, which hinders performance and is hazardous.

As illustrated in FIGS. 11-17, non-limiting embodiments of the invention provide a shoe having an outsole 10 that includes a generally flat region 12 which serves as the female engagement component described above. For example, the generally flat region 12 may be formed from a material having the properties described above, including a low rebound elasticity, a high viscoelasticity, and a hardness that is low enough to allow a desired amount of deformation (for imprinting) and hard enough to impart a desired amount of stability.

As also described above, the female engagement component of the generally flat region 12 is configured to interact with a male engagement component, such as pins 6 or protrusions of a flat pedal. In some embodiments, the pins 6 are between approximately 1 and 15 mm tall, although the pins 6 may have any suitable dimensions. In some embodiments, the pins 6 are between 4 mm and 10 mm tall. Pins 6 may be of uniform size and shape or may be irregular. Moreover, pins may be positioned any suitable distance from one another. In some cases, pins 6 are microstructures with heights of less than 1 mm. The pins and/or the pedal may be metal, or any synthetic material or other durable material such as renewable natural materials. In some cases, there will be only one pin 6 per pedal. As shown in FIG. 18, the pins 6 may project from pedal 4 at an approximately 90 degree angle from reference axis R, which corresponds to a longitudinal axis of the pedal. In some embodiments, a portion of the pedal itself serves as the male engagement component, such as protrusions on the pedal.

As detailed above, the generally flat region 12 is configured so that, when sufficient pressure is applied, pins 6 are capable of imprinting within the material to releasably attach the outsole 10 of the shoe to the pedal 4. In the context of shoes, sufficient pressure may be defined by weight applied to the connection system by the person wearing the shoe. For example, the pressure may vary from approximately 20 to approximately 150 kilograms, depending on the age, gender, and body type of the user. In essence, the material of the generally flat region 12 is such that it flows/floats around the pins 6 when the pins are in contact with the material (as shown in FIGS. 1-9 and as described above) when the generally flat region 12 is placed above the pins.

In some embodiments, the generally flat region 12 is substantially free of treads and other protrusions and is otherwise substantially smooth. Because the generally flat region 12 is substantially smooth, the pins are capable of imprinting within any part of the generally flat region 12 when the shoe applies sufficient pressure in a generally vertical direction V to the pins, which is in contrast to the configuration shown in FIG. 10, where the cyclist is required to orient the outsole in a specific way to ensure that the pins are aligned in a specific position with respect to the treads.

Once the pins have imprinted within the generally flat region 12, the outsole 10 is locked in position and restricted from moving in a generally horizontal direction H, as well as any diagonal direction such as directions X and Y shown in FIG. 18. Directions X and Y may be any angle with respect to reference axis R between approximately 0 and less than approximately 85 degrees and between more than approximately 95 degrees and approximately 180 degrees. As described above, the connection between the generally flat region 12 and the pins 6 may be released by lifting the outsole 10 upward in the substantially vertical direction V.

Locking the outsole 10 in the non-vertical directions when the pins 6 are imprinted within the generally flat region 12 prevents the outsole from slipping off the pedal. Moreover, connecting the outsole 10 with the pedal allows the cyclist to apply power during both the upstroke and the downstroke when pedaling. This is feasible because the pedal stroke is a circular movement and thus the movement is in a diagonal direction instead of in a generally vertical direction V (FIG. 18). As mentioned above, the connection of the outsole 10 to the pedal is locked in the non-vertical (diagonal and horizontal) directions and thus the outsole remains connected to the pedal while a cyclist pedals.

Because of the properties of the female engagement component described above, the disclosed connection system allows a cyclist to unlock/disengage the connection between the generally flat region 12 and the pins 6 simply by releasing the pressure imparted on the pedal in a generally vertical direction V (see FIG. 18). Once released (in some cases, not fully released, but with low pressure still applied), but while the pins are still in contact with the generally flat region, the cyclist is capable of adjusting the position of the outsole with respect to the pedal, such as in a generally horizontal direction H (FIG. 18). In other words, relative movement between the generally flat region 12 and the pins 6 is permitted while the generally flat region 12 is still in contact with the pins 6. Thus, the generally flat region 12 is available for connection with the pins 6 without the connection system itself acting as a constraint. Moreover, the position of the outsole 10 with respect to the pedal can be readily adjusted without the cyclist lifting the shoe above the pins and off the pedal. This allows the cyclist to release and adjust the shoe in a sliding movement. This is in contrast to the configuration shown in FIG. 10, where the cyclist is required to move the outsole in a vertical movement so that the outsole no longer contacts the pins for the cyclist to be able to adjust the shoe with respect to the pedal.

As also described above, the material of the generally flat region 12 is such that the pins 6 can re-sink into the generally flat region 12 so that the pins can be repeatedly engaged and disengaged with the generally flat region 12 in any desired way at any position along the generally flat region 12.

FIGS. 11-12 are plan views of embodiments of an outsole 10 having a generally flat region 12. In these embodiments, the generally flat region 10 is located along the mid-foot region 18 of the outsole, although the placement of generally flat region 12 along the outsole may vary. For example, the generally flat region 12 may extend along any suitable distance between the toe region 16 and the heel region 20. In some embodiments, the generally flat region 12 extends further downward toward the heel region 20 along the sides of the outsole than it does along the middle of the outsole, or vice versa.

Moreover, the size and dimensions of the generally flat region 12 may vary. In some embodiments, the minimum dimensions of the generally flat region 12 correspond with the dimensions of the pedal with which it interacts, although this is not required.

In some embodiments, outsole 10 includes treads 14 along the toe region 16 and/or the heel region 20 to provide grip and assist the cyclist with walking when off the bike or to provide grip in situations where the cyclist needs to stabilize and balance by removing his foot from the pedal and touching the ground or surface near the bike. In some embodiments, the toe region 16 and the heel region 20 have limited to no contact with the pedal during normal cycling. The design of the toe and heel regions may vary, including the design of the tread if any is located within these regions. For instance, the tread region 14 may be configured in a dot or fence or any other suitable pattern, with or without sipes. For example, either the toe region 16 or the heel region 20 or both may have any of the treads 14 shown in FIG. 11-13 or FIGS. 16-18 or any combination thereof.

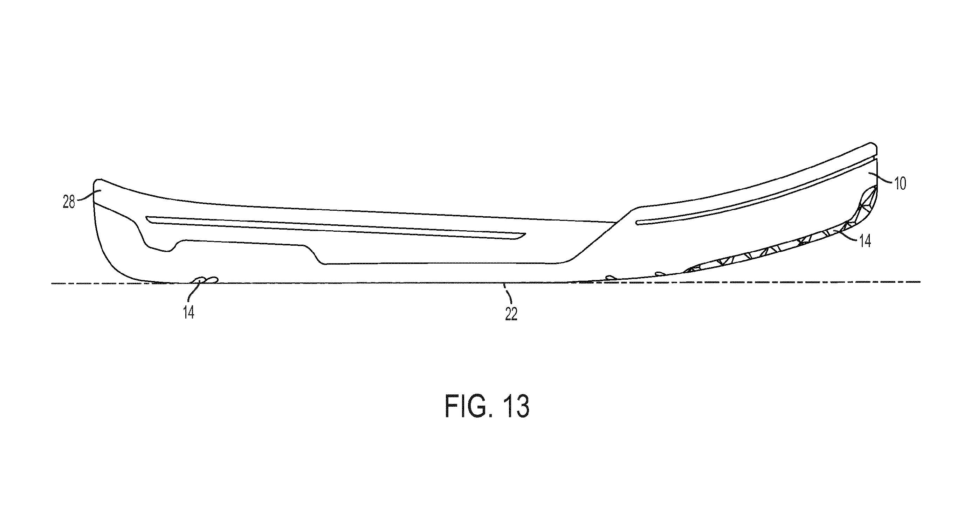

FIG. 13 illustrates a side view of one embodiment of an outsole 10 and a midsole 28, which is placed adjacent the outsole. In some embodiments, the midsole provides cushioning and may be formed of one or more suitable materials. The midsole might extend over the full surface of the foot area in some embodiments, or just over portions of the foot area in other embodiments. In one embodiment, the outsole is placed underneath the midsole and extends partly over the foot area. In some embodiments, the flat region and the toe and/or heel regions are decoupled.

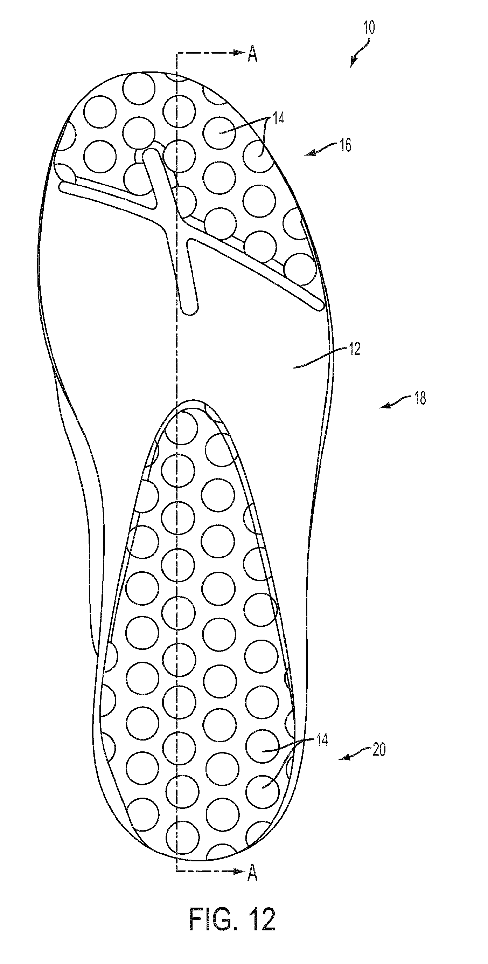

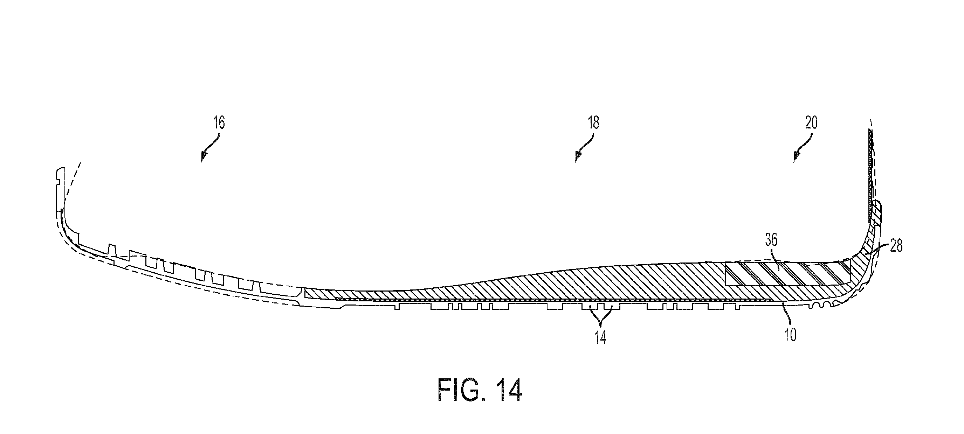

FIG. 14 illustrates a cross-section of the shoe of FIG. 12 taken along the line A-A. As shown in FIG. 14, the midsole 28 is placed on top the outsole 10 and the thickness of the midsole varies across the midsole. In some embodiments, the midsole is thicker in a heel region for improved dampening. In some embodiments, both the cross-section and the thicknesses of the midsole vary. In some embodiments, the midsole comprises one or more additional foam inserts 36, which may have different dampening properties than the midsole.

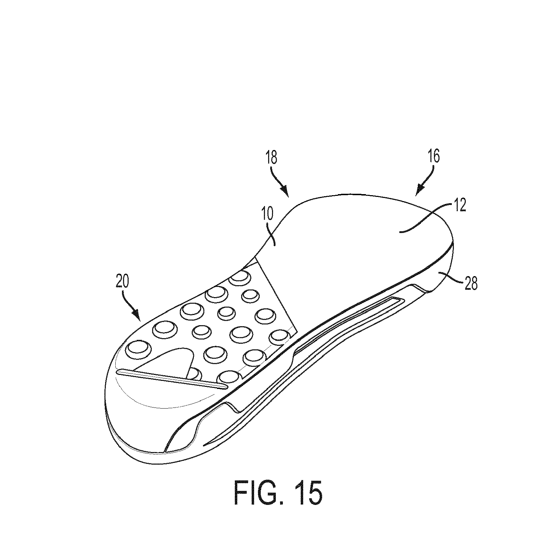

In the embodiment shown in FIG. 15, the generally flat region 12 extends from a tip of the toe region 16 to the center of the mid-foot region 18. This positioning might be desired in a sport where a releasable connection in the toe area is preferred, such as for use with an exercise machine.

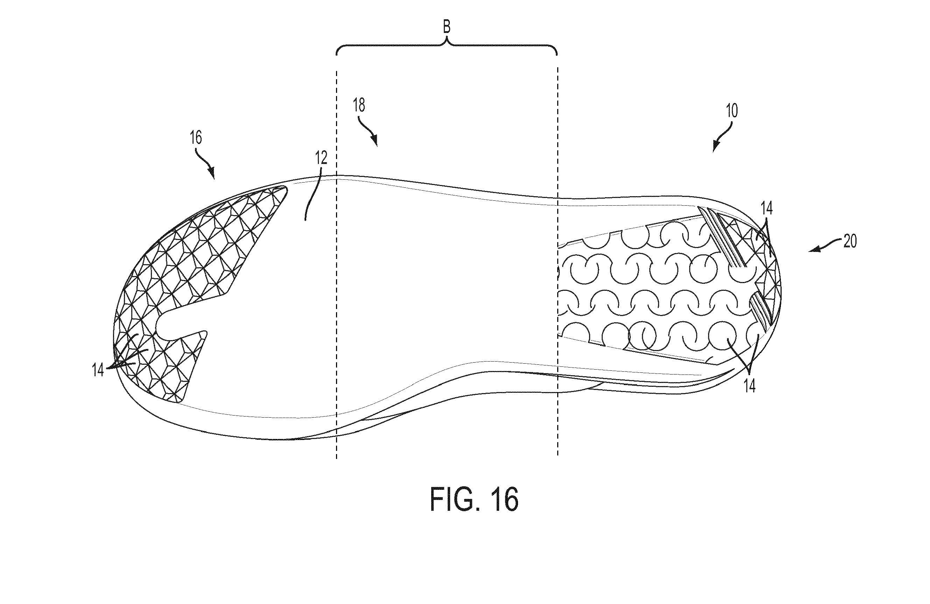

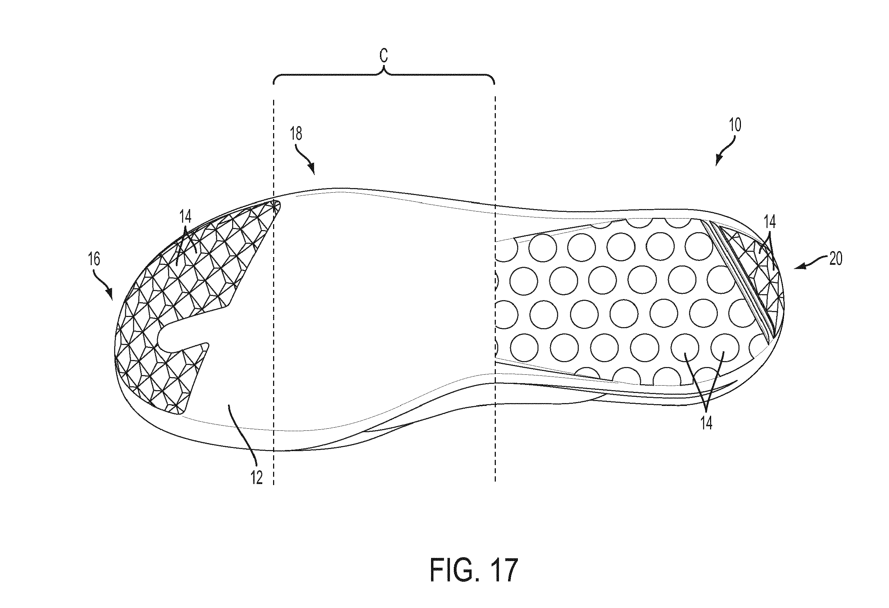

Positioning the pedal 4 in an area B along generally flat region 12 beginning underneath the toe region 16 and extending along the complete width to about the center of the foot to middle of the mid-foot region 18 as shown in FIG. 16 may provide central balance (i.e., when pedaling downhill or standing on the bike) and stability and is beneficial when applying weight on the pedal. Positioning the pedal 4 in an area C along generally flat region 12 beginning underneath the ball of the foot area and extending along the complete width to about the lower end of the mid-foot region 18 and ending above the heel region 20 as shown in FIG. 17 may provide increased power output while pedaling.

In some embodiments, the outsoles may include flat surface in areas for preferred movement and, in some embodiments, the outsoles may include a flat surface in more than one preferred area and improve the connection and adjusting of the position and the adjusting movement on the outsole.

The foregoing is provided for purposes of illustrating, explaining, and describing embodiments of the present invention. The foregoing is not limited to use with shoes or with cycling shoes, but may be used in many other applications as described above. Further modifications and adaptations to these embodiments will be apparent to those skilled in the art and may be made without departing from the scope or spirit of the invention. Different arrangements of the components depicted in the drawings or described above, as well as components and steps not shown or described are possible. Similarly, some features and subcombinations are useful and may be employed without reference to other features and subcombinations. Embodiments of the invention have been described for illustrative and not restrictive purposes, and alternative embodiments will become apparent to readers of this patent. Accordingly, the present invention is not limited to the embodiments described above or depicted in the drawings, and various embodiments and modifications can be made without departing from the scope of the claims below.
In the following, further examples are described to facilitate the understanding of the invention:
1. A system comprising:
   a first device having a female engagement component comprising a material with a rebound elasticity that is less than approximately 20% and an elongation of more than approximately 600%; and
   a second device having at least one male engagement component that is capable of imprinting within the material of the female engagement component to releasably attach the first device to the second device when a surface of the female engagement component is positioned approximately 90 degrees relative to a longitudinal axis of the at least one male engagement component and pressure is applied.
2. The system of example 1, wherein the material of the female engagement component has a hardness between approximately 40 Shore A and approximately 70 Shore A.
3. The system of example 1, wherein the pressure is applied between the engagement components of the two devices.
4. The system of example 1, wherein a relative position between the first and second devices is fixed in at least one direction when the pressure is applied between the first and second devices.
5. The system of example 4, wherein the relative position between the first and second devices may be adjusted when the pressure is no longer applied and while the at least one male engagement component remains in contact with the female engagement component.
6. The system of example 1, wherein the female engagement component has a generally flat surface.
7. The system of example 1, wherein the first device is an outsole of a shoe and the second device is a pedal.
8. The system of example 1, wherein the first device is a storable good.
9. The system of example 1, wherein the first device is a transportable good.
10. The system of example 1, wherein the material of the female engagement component is configured to flow or float around the at least one male engagement component when the pressure is applied between the first and second devices.
11. The system of example 5, wherein the material of the first device is configured to flow or float around the at least one male engagement component when the pressure is no longer applied between the first and second devices but when the engagement components are still in contact with one another.
12. An outsole comprising a mid-foot region located between a toe region and a heel region of the outsole, wherein the mid-foot region has a generally flat region that is substantially free from treads and projections and that is configured so that protrusions of a pedal are capable of imprinting within a material of the generally flat section to releasably attach the pedal to the outsole.
13. The outsole of example 12, wherein the protrusions are pins attached to the pedal, pins fixed with the pedal, or an uneven surface structure.
14. The outsole of example 11, wherein a relative position between the pedal and the outsole is fixed when the outsole applies pressure to the pedal.
15. The outsole of example 14, wherein the relative position between the pedal and the outsole may be adjusted when the pressure is no longer applied and while the protrusions are in contact with the generally flat region.
16. The outsole of example 14, wherein the relative position between the pedal and the outsole may be adjusted when the pressure is no longer applied and while the protrusions are in contact with the generally flat region.
17. The outsole of example 12, wherein at least one of the toe region and the heel region comprises treads.
18. The outsole of example 12, wherein the material of the generally flat region is configured to flow or float around the protrusions when the generally flat region contacts the protrusions and pressure is applied.
19. The outsole of example 12, wherein the material has a rebound elasticity that is less than approximately 20% and an elongation of more than approximately 600%.
20. The outsole of example 19, wherein the material has a hardness between approximately 40 Shore A and approximately 70 Shore A.
21. The system of example 12, wherein the attachment between the pedal and the outsole is releasable in a substantially vertical direction.
22. A shoe comprising:
   an upper portion; and
   an outsole comprising a generally flat region located between a toe region and a heel region, wherein the generally flat region is formed of a material having a rebound elasticity that is less than approximately 20% and an elongation of more than approximately 600%,
   wherein the material is configured so that protrusions of a connection device imprint within the material to releasably attach the outsole to the connection device when the outsole applies pressure to the connection device.
23. The shoe of example 22, wherein the protrusions are pins attached to the connection device, pins fixed with the connection device, or an uneven surface structure.
24. The shoe of example 22, wherein the connection device is a pedal or a sports-related device.
25. The shoe of example 22, wherein the material of the generally flat region has a hardness between approximately 40 Shore A and approximately 70 Shore A.
26. The shoe of example 22, wherein a relative position between the connection device and the outsole is fixed when the outsole applies the pressure to the connection device.
27. The shoe of example 26, wherein the relative position between the connection device and the outsole may be adjusted when the pressure is no longer applied.
28. The shoe of example 26, wherein the relative position between the connection device and the outsole may be adjusted when the pressure is no longer applied and while the protrusions are in contact with the generally flat region.
29. The shoe of example 22, wherein at least one of the toe region and the heel region of the outsole comprises treads.
30. The shoe of example 22, wherein the material of the generally flat region is configured to flow or float around the protrusions when the generally flat region contacts the protrusions and pressure is applied.
31. The shoe of example 22, further comprising a midsole positioned above the outsole.
32. The shoe of example 31, wherein the midsole is formed of foam.
33. The shoe of example 32, wherein the foam is formed of ethylene vinyl acetate.

## Claims

1. A system comprising:
a first device having a female engagement component comprising a material with a rebound elasticity that is less than approximately 20% and an elongation of more than approximately 600%; and
a second device having at least one male engagement component that is capable of imprinting within the material of the female engagement component to releasably attach the first device to the second device when a surface of the female engagement component is positioned approximately 90 degrees relative to a longitudinal axis of the at least one male engagement component and pressure is applied.

2. The system of claim 1, wherein the material of the female engagement component has a hardness between approximately 40 Shore A and approximately 70 Shore A.

3. The system of claim 1, wherein the pressure is applied between the engagement components of the two devices.

4. The system of claim 1, wherein a relative position between the first and second devices is fixed in at least one direction when the pressure is applied between the first and second devices.

5. The system of claim 4, wherein the relative position between the first and second devices may be adjusted when the pressure is no longer applied and while the at least one male engagement component remains in contact with the female engagement component.

6. The system of claim 1, wherein the female engagement component has a generally flat surface.

7. The system of claim 1, wherein the first device is an outsole of a shoe and the second device is a pedal.

8. The system of claim 1, wherein the first device is a storable good, or a transportable good.

9. The system of claim 1, wherein the material of the female engagement component is configured to flow or float around the at least one male engagement component when the pressure is applied between the first and second devices.

10. The system of claim 5, wherein the material of the first device is configured to flow or float around the at least one male engagement component when the pressure is no longer applied between the first and second devices but when the engagement components are still in contact with one another.

11. An outsole comprising a mid-foot region located between a toe region and a heel region of the outsole, wherein the mid-foot region has a generally flat region that is substantially free from treads and projections and that is configured so that protrusions of a pedal are capable of imprinting within a material of the generally flat section to releasably attach the pedal to the outsole.

12. The outsole of claim 11, wherein the protrusions are pins attached to the pedal, pins fixed with the pedal, or an uneven surface structure.

13. The outsole of claim 11, wherein at least one of the toe region and the heel region comprises treads.

14. The system of claim 11, wherein the attachment between the pedal and the outsole is releasable in a substantially vertical direction.

15. A shoe comprising:
an upper portion; and
an outsole comprising a generally flat region located between a toe region and a heel region, wherein the generally flat region is formed of a material having a rebound elasticity that is less than approximately 20% and an elongation of more than approximately 600%,
wherein the material is configured so that protrusions of a connection device imprint within the material to releasably attach the outsole to the connection device when the outsole applies pressure to the connection device.
